# EUROPEAN PATENT APPLICATION

(11) **EP 4 438 172 A1**
(43) Date of publication of application: **02.10.2024**
(21) Application number: 24157789.9
(22) Date of filing: 15.02.2024
(51) Int. Cl.: B01J 23/83

(54) **CATALYST FOR CARBON DIOXIDE HYDROGENATION TO METHANOL AND METHOD OF PREPARATION THEREOF**

(30) Priority: 28.03.2023 IN 202341022626
(71) Applicant: Hindustan Petroleum Corporation Limited, Bangalore 560067 (IN)
(72) Inventor: SANTOSH, Kotni, 560067 KARNATAKA (IN); GNANASEKARAN, Valavarasu, 560067 KARNATAKA (IN); SHANBHAG, Ganapati V., 560080 KARNATAKA (IN); VETRIVEL, Rajappan, 560080 KARNATAKA (IN); HALGERI, Anand B., 560080 KARNATAKA (IN); S, Sujith, 560080 KARNATAKA (IN); MALLANNAVAR, Chaitra N., 560080 KARNATAKA (IN); VAIBHAVA, K M, Rajashekhar, 560080 KARNATAKA (IN)
(74) Representative: Schmidt, Martin Peter

(57) **Abstract**

The present disclosure relates to a catalyst for carbon dioxide hydrogenation to methanol having 80-95% w/w of a metal and their oxides; 5-20% w/w of a structural promoter; and 5-10% w/w of a binder of the total weight of the catalyst. Further, the present disclosure also relates to a method for preparation of a catalyst for carbon dioxide hydrogenation to methanol having a) co-precipitating of 80-95%w/w of a metal precursors of the total weight of the catalyst under with a 1.0-1.8M precipitating agent followed by adding 5-20% w/w of a structural promoter of the total weight of the catalyst to obtain an active metal precipitate, b) washing and drying the active metal precipitate under conditions to obtain a dried active metal precipitate followed by calcination under conditions to form a mixed metal oxide, c) adding 5-10% w/w of a binder of the total weight of the catalyst to the 90-95% w/w mixed metal oxides along with 0.5-1.5M peptizing agent, followed by drying and calcination under conditions to obtain a catalyst for CO₂ hydrogenation to methanol. The present catalyst yielded higher methanol with higher selectivity.

## Description

### FIELD OF THE INVENTION

The present disclosure relates to a catalyst for carbon dioxide hydrogenation to methanol. The present disclosure also relates method for preparation of a catalyst for carbon dioxide hydrogenation to methanol.

### BACKGROUND OF THE INVENTION

Background description includes information that may be useful in understanding the present invention. It is not an admission that any of the information provided herein is prior art or relevant to the presently claimed invention, or that any publication specifically or implicitly referenced is prior art.

Catalytic hydrogenation of CO₂ has potential to convert CO₂ emissions from industries to value added chemicals like methanol, which is a key intermediate for several industrially important chemical processes in the production of dimethyl ether (DME), gasoline, biodiesel, formaldehyde, acetic acid etc. This is essential to mitigate these CO₂ emissions, which are greatly responsible for global warming. In India, domestic production of methanol has fallen by 57% from 2010-11 to 2015-16, whereas the consumption of the chemical has risen by 61% over the same period. Targeting CO₂ emissions is not only a journey towards net-zero emissions, but also help improve the country's domestic production.

CO₂ being a thermodynamically stable molecule, achieving high conversion and methanol yield purely depends on suitable catalyst design and finding optimal reaction process conditions.

There has been a continuous effort in designing catalyst for hydrogenation of CO₂ to methanol. CN103263926A discloses a catalyst for synthesizing methanol through carbon dioxide hydrogenation, wherein the catalyst is composed of the combinations of monovalent (Ma) or divalent metal (Ma) ions in combination with trivalent (Mb) or tetravalent (Mb) ions. Molar ratio of each metal is: (n (Cu) + n (Zn) + n (Ma)]: [n (Al) + n (Mb)] =2-15, n (Cu): n (Zn) = 0.5-4, n (Ma): n (Zn) = 0-1, n (Mb): n (Al) is equal to 0-9. CN110252308B discloses active metal dispersed in atomic level in a support carrier metal oxide is suitable for CO₂ hydrogenation to methanol. The active metal comprises one or more of Cr, Mn, Fe, Co, Ni, Cu, Zn, Mo, Ru, Rh, Pd, Ag, W, Ir, Pt, Au, the carrier metal comprises Ti, Zr, Nb, Ce, Al, Ga, In, Si, Ge, Sn is one or more.

While many prior arts are reported for improvement in catalyst formulation, still exists a need in the art for further understanding of the catalyst activity and hence its design. Density functional theory (DFT) calculations and related computational methods have evolved into a predictive tool for materials design with the advancements in mathematical algorithms and computational hardware. One of the approaches followed for the claims disclosed in the present invention is use of DFT modelling to design catalyst compositions, by understanding optimal CO₂ adsorption energy required for efficient hydrogenation of CO₂ to methanol.

### OBJECTS OF THE INVENTION

An objective of the present invention is to provide a catalyst for carbon dioxide hydrogenation to methanol.

Another objective of the present invention is to provide a method for preparation of a catalyst for carbon dioxide hydrogenation to methanol.

### BRIEF DESCRIPTION OF THE DRAWINGS

Figure 1 showed X-Ray Diffraction (XRD) Analysis.
Figure 2 showed CO₂-Temperature Programmed Desorption (TPD) Studies.
Figure 3 showed Temperature Programmed Reduction (TPR) Studies.

### SUMMARY OF THE INVENTION

This summary is provided to introduce a selection of concepts in a simplified form that are further described below in Detailed Description section. This summary is not intended to identify key features or essential features of the claimed subject matter, nor is it intended to be used as an aid in determining the scope of the claimed subject matter.

The present disclosure discloses a catalyst for carbon dioxide hydrogenation to methanol comprising: 80-95 % w/w of a metal and their oxides of the total weight of the catalyst; 5-20 % w/w of a structural promoter of the total weight of the catalyst; and 5-10 % w/w of a binder of the total weight of the catalyst.

The present disclosure discloses a method for preparation of a catalyst for carbon dioxide hydrogenation to methanol comprising: a) co-precipitating of 80-95 % w/w of a metal precursors of the total weight of the catalyst under with a 1.0 - 1.8 M precipitating agent followed by adding 5-20 % w/w of a structural promoter of the total weight of the catalyst to obtain an active metal precipitate; b) washing and drying the active metal precipitate at a temperature in the range of 70-90 °C for a period in the range of 8-12 hrs to obtain a dried active metal precipitate followed by calcination at a temperature in the range of 300-400 °C for a period in the range of 3-5 hrs to form a mixed metal oxide; and c) adding 5-10 % w/w of a binder of the total weight of the catalyst to the 90-95 % w/w mixed metal oxides along with 0.5 - 1.5 M peptizing agent, followed by drying at a temperature in the range of 70-90 °C for a period in the range of 8-12 hrs and calcination at a temperature in the range of 300-400 °C for a period in the range of 3-5 hrs to obtain a shaped final catalyst for CO₂ hydrogenation to methanol.

Various objects, features, aspects and advantages of the inventive subject matter will become more apparent from the following detailed description of preferred embodiments.

### DETAILED DESCRIPTION OF THE INVENTION

The following is a detailed description of embodiments of the disclosure. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

Unless the context requires otherwise, throughout the specification which follow, the word "comprise" and variations thereof, such as, "comprises" and "comprising" are to be construed in an open, inclusive sense that is as "including, but not limited to."

As used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

In some embodiments, the numbers expressing quantities of ingredients, properties such as concentration, reaction conditions, and so forth, used to describe and claim certain embodiments of the invention are to be understood as being modified in some instances by the term "about." Accordingly, in some embodiments, the numerical parameters set forth in the written description are approximations that can vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the invention are approximations, the numerical values set forth in the specific examples are reported as precisely as practicable.

The recitation of ranges of values herein is merely intended to serve as a shorthand method of referring individually to each separate value falling within the range. Unless otherwise indicated herein, each individual value is incorporated into the specification as if it is individually recited herein.

All processes described herein can be performed in any suitable order unless otherwise indicated herein or otherwise clearly contradicted by context. The use of any and all examples, or exemplary language (e.g. "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

The headings and abstract of the invention provided herein are for convenience only and do not interpret the scope or meaning of the embodiments.

The following discussion provides many example embodiments of the inventive subject matter. Although each embodiment represents a single combination of inventive elements, the inventive subject matter is considered to include all possible combinations of the disclosed elements. Thus if one embodiment comprises elements A, B, and C, and a second embodiment comprises elements B and D, then the inventive subject matter is also considered to include other remaining combinations of A, B, C, or D, even if not explicitly disclosed.

All publications herein are incorporated by reference to the same extent as if each individual publication or patent application were specifically and individually indicated to be incorporated by reference. Where a definition or use of a term in an incorporated reference is inconsistent or contrary to the definition of that term provided herein, the definition of that term provided herein applies and the definition of that term in the reference does not apply.

Groupings of alternative elements or embodiments of the invention disclosed herein are not to be construed as limitations. Each group member can be referred to and claimed individually or in any combination with other members of the group or other elements found herein. One or more members of a group can be included in, or deleted from, a group for reasons of convenience and/or patentability. When any such inclusion or deletion occurs, the specification is herein deemed to contain the group as modified thus fulfilling the written description that follows, and the embodiments described herein, is provided by way of illustration of an example, or examples, of particular embodiments of the principles and aspects of the present disclosure. These examples are provided for the purposes of explanation, and not of limitation, of those principles and of the disclosure.

It should also be appreciated that the present invention can be implemented in numerous ways, including as a system, a method or a device. In this specification, these implementations, or any other form that the invention may take, may be referred to as processes. In general, the order of the steps of the disclosed processes may be altered within the scope of the invention.

Various terms as used herein are shown below. To the extent a term used in a claim is not defined below, it should be given the broadest definition persons in the pertinent art have given that term as reflected in printed publications and issued patents at the time of filing.

An embodiment of the present disclosure discloses a catalyst for carbon dioxide hydrogenation to methanol comprising: 80-95 % w/w of a metal and their oxides of the total weight of the catalyst; 5-20 % w/w of a structural promoter of the total weight of the catalyst; and 5-10 % w/w of a binder of the total weight of the catalyst.

An embodiment of the present disclosure discloses that the metal and their oxides is selected from a group consisting of copper, cobalt, zinc oxide, indium oxide, zirconia, gallium oxide, nano zirconia, lanthanum, ceria, nickel oxide, palladium, titania and combination thereof.

An embodiment of the present disclosure discloses that the structural promoter is selected form a group consisting of silica, alumina, alumina-silica, magnesium silicate, zirconia, ceria, titania and combination thereof.

An embodiment of the present disclosure discloses that the binder is selected from a group consisting of pseudo boehmite, ludox silica, precipitated silica, hydroxy propyl methyl cellulose and combination thereof.

An embodiment of the present disclosure discloses that the catalyst comprising: 55% w/w of Cu, 5% w/w of Ti, 20%w/w of Zn, 5% w/w of Zr, 5% w/w of Al and 10% w/w of Ce.

Another embodiment of the present disclosure discloses method for preparation of a catalyst for carbon dioxide hydrogenation to methanol comprising: a) co-precipitating of 80-95 % w/w of a metal precursors of the total weight of the catalyst under with a 1.0 - 1.8 M precipitating agent followed by adding 5-20 % w/w of a structural promoter of the total weight of the catalyst to obtain an active metal precipitate; b) washing and drying the active metal precipitate at a temperature in the range of 70-90 °C for a period in the range of 8-12 hrs to obtain a dried active metal precipitate followed by calcination at a temperature in the range of 300-400 °C for a period in the range of 3-5 hrs to form a mixed metal oxide; and c) adding 5-10 % w/w of a binder of the total weight of the catalyst to the 90-95 % w/w mixed metal oxides along with 0.5 - 1.5 M peptizing agent, followed by drying at a temperature in the range of 70-90 °C for a period in the range of 8-12 hrs and calcination at a temperature in the range of 300-400 °C for a period in the range of 3-5 hrs to obtain a shaped final catalyst for CO₂ hydrogenation to methanol.

Another embodiment of the present disclosure discloses that the precipitating agent and the metal precursors are co-precipitated at a pH in the range of 7.5 to 9.

Another embodiment of the present disclosure that the metal precursor and structural promoter preferably nitrates.

Another embodiment of the present disclosure discloses that the precipitating agent is selected from a group consisting of a plasticizer, sodium carbonate, sodium hydroxide, cetyl trimethyl ammonium bromide (CTAB), ethylene diamine and combination thereof.

Another embodiment of the present disclosure discloses that the peptizing agent is selected from a group consisting of nitric acid, acetic acid, citric acid formic acid, phosphoric acid and combination thereof.

Another embodiment of the present disclosure discloses that the plasticizer is hydroxy propyl methyl cellulose, hydroxyethyl cellulose, polyethylene glycol, starch, sugar and combination thereof.

Another embodiment of the present disclosure discloses that the washing is done with hot water.

In an embodiment, the present invention relates to the design of an active catalyst for CO₂ hydrogenation to methanol through thermocatalytic pathway. Density functional theory calculations have been carried out to simulate the catalyst properties in terms of CO₂ adsorption on the catalyst surface and this data has been used as key parameter to design active catalyst formulation.

In an embodiment, the synthesis of the catalyst is carried out through precipitation, co-precipitation, wet and incipient (dry) impregnation methods.

In an embodiment, the methods of catalyst characterization are BET surface area, pore volume, pore size, X-Ray Diffraction Spectrophotometer (XRD), X-Ray Fluorescence Spectrophotometer (XRF), Crushing strength, FE-SEM-EDX, CO₂ desorption, ammonia temperature programmed desorption (NH₃-TPD), H₂ temperature programmed reduction (H₂ - TPR).

In an embodiment, the activity of the catalysts are tested under different temperature conditions from 230 - 300 °C, Pressure 30 - 40 bar, Gas Hourly Space Velocity (GHSV) 4000 - 15000 h⁻¹ while maintaining CO₂ to H₂ ratio of 1:3, in a tubular fixed bed reactor. During the entire reaction, N₂ was used as internal standard for data analysis. Liquid and gas samples were analyzed by gas chromatography (GC) and refinery gas analyzer (RGA).

Catalyst design has been performed using simulation studies. Density functional theory (DFT) simulation studies have been employed for estimating CO₂ adsorption energy on catalyst surface. This is identified as key parameter to arrive at the suitable catalyst and correlated with experimental data.

The catalyst systems prepared and evaluated for this reaction are multimetallic oxides and the following table shows the laundry list of metals which are tested for this reaction.

| **S.No.** | **List of Materials** | **wt% ranges** |
|---|---|---|
| 1 | **Metals and their oxides:** | 80 - 95% |
| | Copper (Cu), Zinc Oxide (ZnO), Indium oxide (In₂O₃), Zirconia (ZrO₂), Gallium Oxide (Ga₂O₃), nano Zirconia (nano-ZrO₂), Cobalt (Co), Lanthanum (La), Ceria (CeO), Nickel oxide (NiO), Palladium (Pd) | |
| 2 | **Support/Structural Promoters:** | 5 - 20% |
| | Silica (SiO₂), Alumina-Silica (Al₂O₃-SiO₂), Alumina (Al₂O₃), Magnesium silicate (Talc), Zirconia (ZrO₂), Ceria (CeO), Titania (TiO₂) | |
| 3 | **Binders:** | 5 - 10% |
| | Pseudo boehmite, ludox silica, precipitated silica, Hydroxy propyl methyl cellulose | |
| 4 | **Other chemicals required for precipitation and making extrudates:** | |
| | Peptizing agents (nitric acid, citric acid), plasticizer (Hydroxy propyl methyl cellulose), sodium carbonate (Na₂CO₃), Ceetyl Trimethyl Ammonium Bromide (CTAB), Ethylene diamine. | |

While the foregoing describes various embodiments of the disclosure, other and further embodiments of the disclosure may be devised without departing from the basic scope thereof. The invention is not limited to the described embodiments, versions or examples, which are included to enable a person having ordinary skill in the art to make and use the invention when combined with information and knowledge available to the person having ordinary skill in the art.

### EXAMPLES

The present invention is further explained in the form of following examples. However, it is to be understood that the following examples are merely illustrative and are not to be taken as limitations upon the scope of the invention.

### Examples 1: 60% CuO + 25% ZnO + 5% ZrO₂+10% Al₂O₃

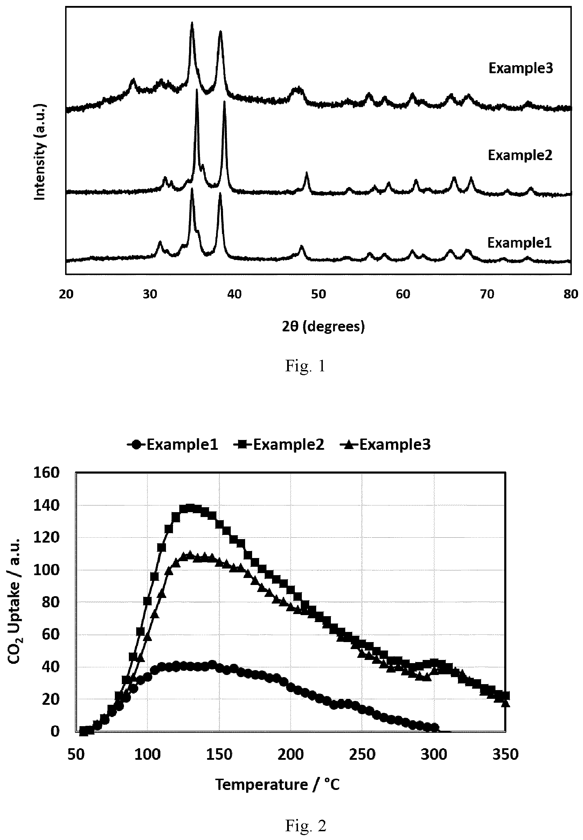

The catalyst was prepared by simple co-precipitation method with Na₂CO₃ as precipitation agent. Under vigorous stirring, a mixed aqueous solution of Cu(NO₃)₂.3H₂0 (0.5 M), Zn(NO₃)₂.6H₂O (0.5 M), Zirconium nitrate hydrate (0.5 M) and Aluminium nitrate nonahydrate (0.5 M) were added to form a homogeneous solution. Then, aqueous solution of Na₂CO₃ (1.2 M) was added drop wise to the solution at 75 °C till pH = 8. The solution was agent at the same temperature for 15 h and hater washed thoroughly with hot distilled water to remove all the Na⁺ ions. The obtained material was dried overnight at 80 °C and calcined in static air at 350 °C for 4 h (rate 2°C/min). X-RAY diffraction (XRD) analysis of the obtained catalyst is shown in Fig. 1.

### Examples 2: 55 % CuO + 25 % ZnO + 10 % Al₂O₃ + 5 % SiO₂ + 5 % ZrO₂

The catalyst was prepared by simple co-precipitation method with Na₂CO₃ as precipitating agent. Under vigorous stirring, a mixed aqueous solution of Zirconium oxychloride octahydrate (0.5 M), Zinc nitrate hexahydrate (0.5 M) and SiO₂ gel support were added to form a homogeneous solution. Then, aqueous solution of Na₂CO₃ (1.2 M) was added dropwise to the solution at 75°C till pH = 8. The solution was aged at the same temperature for 15 h and later washed thoroughly with hot distilled water to remove all the Na⁺ ions. The obtained material was dried overnight at 80 °C and calcined in static air at 350 °C for 4 h (rate 0.5 °C/min). XRD analysis of the obtained catalyst is shown in Fig. 1.

### Example 3: Best Catalyst Formulation

Several catalysts were synthesized and evaluated in a lab scale reactor. Two of the examples are discussed above. After data analysis following has been identified as best catalyst formulation. XRD analysis of the obtained catalyst is shown in Fig. 1.

55% Cu + 5% Ti + 20% Zn + 5% Zr + 5% Al + 10% Ce

### Example 4: Best catalyst formulation preparation method

The catalyst was prepared by simple co-precipitation method with Na₂CO₃ as precipitating agent. Under vigorous stirring, a mixed aqueous solution of Copper nitrate trihydrate (0.5 M), Zinc nitrate hexahydrate (0.5 M), Zirconium oxychloride octahydrate (0.5 M), Aluminium nitrate nonahydrate (0.5 M), CeO₂ and TiO₂ supports were added to form a homogenous solution. Then, aqueous solution of Na₂CO₃ (1.2 M) was added drop wise to the solution at 75 °C till pH=8. The solution was aged at same temperature for 15 h and later washed thoroughly with hot distilled water to remove all the Na+ ions. The obtained material was dried overnight at 80 °C and calcined in static air at 350 °C for 4h (rate 2°C/min).

### Example 5:

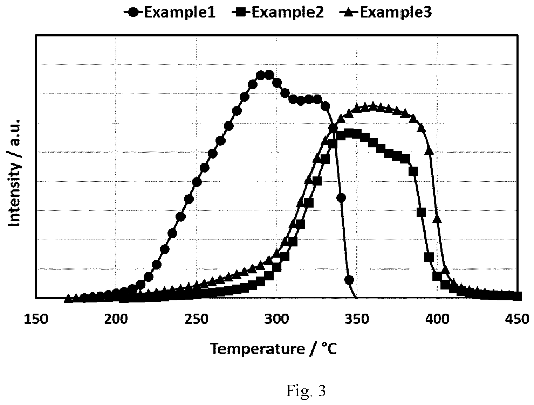

CO₂ TPD studies shown in Fig 2 provide information on CO₂ uptake by different catalyst systems explained in the examples. The results show that, the catalysts have different CO₂ uptake capacities and indicate that too strong or too weak adsorption is not suitable for better activity and optimal CO₂ uptake is a pre-requisite for an efficient CO2 conversion. In the similar lines the TPR studies shown in Fig 3 provide information on suitable temperature required for reduction/pre-treatment of the catalyst prior to the reaction.

### Example 6: Catalyst evaluation data

Catalyst evaluation data of some of the catalysts from different batches and their comparison. Best catalyst formulation clearly indicates need of this composition to attain best activity in terms of CO₂ conversion and methanol yield. Example 3 (55%Cu+5%Ti+20%Zn+5%Zr +5%Al+10%Ce) showed that highest CO₂ conversion is 19 with good Methanol selectivity 69 with STY is 462. CO₂ Adsorption energy (kJ/mol) was found -1.22.

| S.No. | Catalyst | Experimental Results | | | | | DFT |
|---|---|---|---|---|---|---|---|
| | | CO₂ conversion | Methanol selectivity | STY g_{CH3OH}/kg_{cat}/hr | H₂ uptake (mmol/g) | CO₂ uptake (mmol/g) | CO₂ Adsorption energy (kJ/mol) |
| 1 | Bench mark Catalyst (60% CuO + 30% ZnO + 2% MgO + 8% Al₂O₃) | 15 | 70 | 350 | 7.6 | 0.075 | -3.0 |
| Example 1 | 60%CuO-25%ZnO-5%ZrO₂ -10% Al₂O₃ | 18 | 58 | 352 | 6.3 | 0.089 | -4.0 |
| Example 2 | 55%CuO+ 25%ZnO+10%Al₂O₃ +5% SiO₂+ 5% ZrO₂ | 6 | 64 | 302 | 5.7 | 0.09 | -15.49 |
| **Example 3** | **55%Cu+5%Ti+20%Zn+5%Zr +5%Al+10%Ce** | **19** | **69** | **462** | **7.1** | **0.03** | **-1.22** |

A skilled artisan will appreciate that the quantity and type of each ingredient can be used in different combinations or singly. All such variations and combinations would be falling within the scope of present disclosure.

The foregoing examples are merely illustrative and are not to be taken as limitations upon the scope of the invention. Various changes and modifications to the disclosed embodiments will be apparent to those skilled in the art. Such changes and modifications may be made without departing from the scope of the invention.

## Claims

1. A catalyst for carbon dioxide hydrogenation to methanol comprising:
80-95 % w/w of a metal and their oxides of the total weight of the catalyst;
5-20 % w/w of a structural promoter of the total weight of the catalyst; and
5-10 % w/w of a binder of the total weight of the catalyst.

2. The catalyst as claimed in claim 1, wherein the metal and their oxides is selected from a group consisting of copper, cobalt, zinc oxide, indium oxide, zirconia, gallium oxide, nano zirconia, lanthanum, ceria, nickel oxide, palladium, titania and combination thereof.

3. The catalyst as claimed in claim 1, wherein the structural promoter is selected form a group consisting of silica, alumina, alumina-silica, magnesium silicate, zirconia, ceria, titania and combination thereof.

4. The catalyst as claimed in claim 1, wherein the binder is selected from a group consisting of pseudo boehmite, ludox silica, precipitated silica, hydroxy propyl methyl cellulose and combination thereof.

5. The catalyst as claimed in claim 1, wherein the catalyst comprising: 55% w/w of Cu, 5% w/w of Ti, 20%w/w of Zn, 5% w/w of Zr, 5% w/w of Al and 10% w/w of Ce.

6. A method for preparation of a catalyst for carbon dioxide hydrogenation to methanol comprising:
a) co-precipitating of 80-95 % w/w of a metal precursors of the total weight of the catalyst under with a 1.0-1.8 M precipitating agent followed by adding 5-20 % w/w of a structural promoter of the total weight of the catalyst to obtain an active metal precipitate;
b) washing and drying the active metal precipitate at a temperature in the range of 70-90 °C for a period in the range of 8-12 hrs to obtain a dried active metal precipitate followed by calcination at a temperature in the range of 300-400 °C for a period in the range of 3-5 hrs to form a mixed metal oxide; and
c) adding 5-10 % w/w of a binder of the total weight of the catalyst to the 90-95 % w/w mixed metal oxides along with 0.5 - 1.5 M peptizing agent, followed by drying at a temperature in the range of 70-90 °C for a period in the range of 8-12 hrs and calcination at a temperature in the range of 300-400 °C for a period in the range of 3-5 hrs to obtain a shaped final catalyst for carbon dioxide hydrogenation to methanol.

7. The method as claimed in claim 6, wherein the precipitating agent and the metal precursors are co-precipitated at a pH in the range of 7.5 to 9.

8. The method as claimed in claim 6, wherein the metal precursor and structural promoter preferably nitrates.

9. The method as claimed in claim 6, wherein the precipitating agent is selected from a group consisting of a plasticizer, sodium carbonate, sodium hydroxide, cetyl trimethyl ammonium bromide (CTAB), ethylene diamine and combination thereof.

10. The method as claimed in claim 6, wherein the peptizing agent is selected from a group consisting of nitric acid, acetic acid, citric acid formic acid, phosphoric acid and combination thereof.

11. The method as claimed in claim 9, wherein the plasticizer is hydroxy propyl methyl cellulose, hydroxyethyl cellulose, polyethylene glycol, starch, sugar and combination thereof.

12. The method as claimed in claim 6, wherein the washing is done with hot water.
